Europäisches Patentamt

European Patent Office

Office européen des brevets

(19)

(11) Numéro de publication : **0 019 528**
**B1**

# FASCICULE DE BREVET EUROPÉEN

(12)

(45) Date de publication du fascicule du brevet :
28.04.82

(21) Numéro de dépôt : 80400635.1

(22) Date de dépôt : 09.05.80

(51) Int. Cl.³ : **G 01 H   3/12**

(54) **Appareillage de mesure de la puissance d'une source de bruit et du facteur d'absorption d'un matériau.**

(30) Priorité : **10.05.79 FR 7911912**

(43) Date de publication de la demande :
**26.11.80 (Bulletin 80/24)**

(45) Mention de la délivrance du brevet :
**28.04.82 Bulletin 82/17**

(84) Etats contractants désignés :
**DE GB IT**

(56) Documents cités :
**FR - A - 2 346 696**
**JOURNAL OF THE ACOUSTICAL SOCIETY OF AMERICA**
**vol. 45, n° 4, (10-1973), pages 935-949**
**C.E. EBBING et al « Reverberation-room qualification for determination of sound power of sources of discrete-frequency sound »**

(73) Titulaire : **Etablissement Public Télédiffusion de France**
**10, rue d'Oradour-sur-Glane**
**F-75732 Paris Cedex 15 (FR)**

(72) Inventeur : **Pujolle, Jean**
**3, rue Gazan**
**F-75014 Paris (FR)**

(74) Mandataire : **Martinet, René et al**
**Cabinet Martinet 62, rue des Mathurins**
**F-75008 Paris (FR)**

Imprimerie Jouve, 18, rue St-Denis, 75001 Paris, France

# Appareillage de mesure de la puissance d'une source de bruit et du facteur d'absorption d'un matériau

La présente invention concerne des perfectionnements à un appareillage de mesures acoustiques qui est destiné à évaluer dans une salle réverbérante la puissance acoustique d'une source de bruit à tester ou le facteur d'absorption d'un matériau à tester. Plus particulièrement, elle a trait à un appareillage qui comprend une enceinte acoustique renfermant une source de bruit de puissance prédéterminée et ayant une pluralité de haut-parleurs, un premier microphone positionné dans le champ réverbéré de ladite source de bruit de puissance prédéterminée pour détecter le niveau de pression acoustique dans le champ réverbéré, un second microphone fixé à l'un des haut-parleurs de l'enceinte acoustique pour détecter le niveau de pression acoustique du son direct émis par ladite source de bruit de puissance prédéterminée, ledit niveau étant en relation simple avec le niveau de puissance de la source, des moyens pour traiter les signaux électriques transmis par les premier et second microphones pour évaluer la puissance acoustique de la source de bruit à tester ou le facteur d'absorption du matériau à tester, une articulation à cardan, une tige supportant l'articulation à cardan, une barre qui est fixée au point de pivotement de l'articulation à cardan, lequel partage ladite barre en un premier tronçon auquel est fixé le premier microphone et en un second tronçon auquel est fixée l'enceinte acoustique, et un premier moteur relié simultanément au second tronçon de la barre pour entraîner à rotation la barre autour d'un axe passant par ledit point de pivotement, la distance entre l'enceinte acoustique et le premier microphone et l'orientation de l'enceinte acoustique par rapport au premier microphone restant constantes pendant ladite rotation.

Un tel appareillage est décrit dans le brevet français FR-B-2 346 696 (et dans les brevets correspondants britannique GB-A-1 558 641 et allemand DE-C-2 711 792). L'articulation à cardan et le premier moteur reposent fixement et séparément sur le sol de la salle réverbérante par l'intermédiaire de deux pieds télescopiques. Cette organisation permet des mouvements de la barre qui sont limités. Pour une position déterminée des pieds télescopiques, ce mouvement de la barre supportant les microphones et l'enceinte acoustique ne peut être développé que suivant un cône de révolution ayant toujours un même angle au sommet puisque le second tronçon de la barre a une longueur constante et est relié à une manivelle rigide entraînée à rotation par le premier moteur. En outre, pour différentes hauteurs des pieds télescopiques, les cônes de révolution ont des axes parallèles, généralement horizontaux, puisque l'axe de rotation du premier moteur passe par le point fixe de l'articulation à cardan et puisque, en conséquence du fait que la liaison reliant la manivelle et le second tronçon de la barre n'est pas articulée, l'articulation à cardan et le premier moteur sont obligatoirement à égale distance du sol.

Il apparaît que, selon le brevet français FR-B-2 346 696, en vue d'obtenir des résultats précis par moyenne des différences de niveaux de pressions acoustiques notamment dans le cas de l'évaluation du facteur d'absorption d'un matériau à tester, il est nécessaire de déplacer manuellement, dans la salle réverbérante, les pieds télescopiques supportant le premier moteur et l'articulation à cardan afin que le premier microphone capte le champ réverbéré en de nombreuses positions. Comme les différentes positions des pieds télescopiques ne peuvent être repérées avec précision pour une salle réverbérante déterminée, les mesures relatives à la source de bruit prédéterminée doivent être répétées chaque fois que l'on effectue des évaluations de puissance de bruit de plusieurs sources de bruit à tester ou de facteurs d'absorption de matériaux différents.

La présente invention a pour but d'éviter les inconvénients ci-dessus évoqués, en fournissant un appareillage qui permet, pour une salle réverbérante donnée, d'évaluer une fois pour toutes l'intensité directe moyenne du son émis par la source de bruit de puissance prédéterminée afin de la déduire de l'intensité totale du son émis dans toutes les mesures ultérieures concernant l'évaluation des puissances acoustiques d'une pluralité de sources de bruit à tester ou des facteurs d'absorption d'une pluralité de matériaux à tester.

A cette fin, l'appareillage de mesures acoustiques tel que défini dans l'entrée en matière est caractérisé en ce qu'il comprend un bras fixé par l'une de ses extrémités à ladite tige et supportant par son autre extrémité le premier moteur, et un second moteur pour entraîner à rotation ladite tige autour de son axe.

Ainsi, lors des mesures, au préalable on procède à une première phase au cours de laquelle on évalue pour différentes positions microphoniques qui sont repérées mécaniquement avec grande précision, la moyenne des niveaux de pressions acoustiques relativement à la source de bruit de puissance prédéterminée. Puis, au cours de secondes phases, pour ces mêmes positions microphoniques, les mesures de niveau de pression acoustique produit par la source à tester sont réalisées. En tenant compte des résultats de la première phase, on peut évaluer la puissance acoustique de la source à tester.

D'autre part, à partir de la mesure de la différence des niveaux de pression sur les deux microphones, on peut calculer le facteur d'absorption moyen de la salle dans laquelle se trouve la source de puissance prédéterminée.

Avantageusement, en vue d'augmenter les précisions des mesures, c'est-à-dire d'accroître le nombre de positions microphoniques et l'orientation de l'enceinte acoustique, le second tronçon de la barre supportant l'enceinte acoustique est pourvu d'une tige télescopique qui est reliée par l'intermédiaire d'une articulation à rotule à une manivelle fixée à l'axe du premier moteur, et le bras supportant le premier moteur est coulissable et positionnable le long de la tige verticale. Par suite, l'axe du premier moteur peut être positionné au-dessus ou en dessous du point fixe de l'articulation à cardan et peut entraîner la barre suivant un mouvement enveloppant deux cônes obliques opposés par leurs sommets confondus avec le point fixe de l'articulation à cardan. La longueur de la manivelle peut être ajustable. Les positions du bras supportant le premier moteur relativement à la tige et les longueurs de la manivelle pouvant être relevées avec précision, il apparaît que les mesures sont effectuées pour des positions microphoniques tout-à-fait quelconques dans la salle réverbérante et que celles-ci peuvent être choisies une fois pour toutes au cours de la première phase de mesure. Les trajectoires microphoniques sont également réglées en dépendance des vitesses de rotation des premier et second moteurs qui comportent, de préférence, des réducteurs de vitesse ajustables.

D'autres avantages de la présente invention apparaîtront plus clairement à la lecture de la description qui suit d'une réalisation préférée de l'appareillage de mesure qui est représentée en perspective dans la figure unique annexée.

En se référant à la partie supérieure de la figure, on retrouve les principaux organes de l'appareillage décrits dans le brevet français FR-B-2 346 696.

Ces organes sont supportés par la partie supérieure d'une tige tubulaire verticale 1. A l'extrémité supérieure de la tige 1, est fixée une articulation à cardan 2. Elle est composée, selon la réalisation illustrée, par une bague 20 tournant autour d'un picot vertical 21, qui est fixé à l'extrémité supérieure de la tige 1, et par un petit axe cylindrique 22 qui est fixé diamétralement dans la bague 20 suivant l'horizontale.

Une barre 3 est montée tournante au niveau du point médian 23 de l'axe cylindrique 22 qui forme le point fixe de pivotement de l'articulation à cardan 2. Ce point partage la barre 3 en un premier tronçon et en un second tronçon 32. Le premier tronçon 31 a une longueur de préférence ajustable au moyen d'une petite barre 33 qui est montée à coulissement à l'extrémité libre du corps du tronçon 31. L'autre extrémité de la barre 33 supporte un premier microphone 41. Au second tronçon 32 de la barre 3 est fixée une enceinte acoustique 5 renfermant une source de bruit étalon, dont la puissance est connue. Cette source de bruit étalon a été préalablement étalonnée en salle anéchoïque et est, par exemple, du type de celle divulguée dans le brevet français FR-B-2 273 268 (et dans le brevet britannique correspondant GB-A-1 472 713). Devant l'un des haut-parleurs 50 de l'enceinte acoustique 5 est positionné centralement et rigidement un second microphone 42, au moyen d'un croisillon 51 fixé sur l'enceinte acoustique 5. Ainsi, l'organisation des éléments décrits ci-dessus, analogues à ceux de l'appareillage conforme au brevet français 2 346 696, permet des mouvements quelconques de la barre 3 autour du point fixe 23 de l'articulation à cardan 2, de sorte que la distance entre l'enceinte acoustique 5 et le premier microphone 41, d'une part, et l'orientation de l'enceinte acoustique 5 par rapport au premier microphone 41, d'autre part, restent constantes pendant lesdits mouvements. Cette organisation permet de garder constante l'intensité du son direct sur le premier microphone 41.

Egalement, comme divulgué dans le brevet français 2 346 696, une masselotte 34 qui est coulissante sur la petite barre 33 du premier tronçon 31 peut être prévue pour équilibrer les forces de pesanteur appliquée de part et d'autre du point de pivotement 23.

Par contre, le premier moteur 6 d'entraînement à rotation de la barre 3, qui était supporté indépendamment de la tige 1 par un pied télescopique, selon le brevet français FR-B-2 346 696, est, conformément à l'invention, relié à la barre 3 par l'intermédiaire d'un bras coudé 60. La branche sensiblement horizontale du bras 60 est montée à coulissement vertical sur la tige 1 par l'intermédiaire d'un coulisseau prismatique 61 à serrage par pression au moyen de boulons. A l'opposé du bras 60 est fixée au coulisseau 61 une tige horizontale 62 terminée par un contre-poids 63. L'autre branche du bras 60 est verticale et supporte à son extrémité supérieure le premier moteur 6. L'axe de rotation 64 du moteur 6 est horizontal et est solidaire en 652 de la manivelle 65 tournant dans un plan vertical. L'un, 650, des bras de la manivelle 65 est relié, par l'intermédiaire d'une articulation à rotule 66, à une petite barre 35 qui coulisse à l'extrémité du second tronçon 32 de la barre 3. L'autre bras, 651, de la manivelle 65 est terminé par un contre-poids 67. Il apparaît de la description précédente que l'axe 64 du premier moteur 6 peut être positionné au-dessus ou en dessous du point de pivotement 23 de l'articulation à cardan 2 grâce au positionnement du coulisseau 61 le long de la tige 1. D'autre part, la rotation de la manivelle 65 commandée par le moteur 6 entraîne le second tronçon 32 et, par suite, l'ensemble de la barre 3 en un mouvement enveloppant un cône oblique. Ce cône a pour sommet le point fixe de pivotement 23 de l'articulation à cardan 2 et pour directrice le cercle vertical qui a son centre confondu avec le point de fixation 652 de la manivelle 65 et son rayon égal à la longueur effective du bras 650 de la manivelle, c'est-à-dire égal à la distance entre le point 652 et le point de fixation de l'articulation à rotule 66 au bras de manivelle 650. Cette enveloppe conique est possible grâce au coulissement de la petite barre 35 dans le second tronçon 32, dont la longueur varie au cours du mouvement, et grâce à la liaison par articulation à rotule 66 de la petite barre 35 et de la manivelle 65. Conformément à l'invention, la longueur effective du bras 650 de la manivelle 65 peut également être réglable au moyen d'une tige coulissante 653 dans le bras 650 dont la position est établie par une vis de serrage 654, par exemple, ou bien peut être ajustée à des valeurs discrètes par encastrement de la rotule d'extrémité de la barre 35 dans des cavités convenables propres à recevoir la rotule, telles que 655, réparties le long du bras 650 de la manivelle. La variation de longueur effective du bras 650 de la manivelle 65 permet d'engendrer des enveloppes coniques obliques qui ont des angles au sommet et des rayons de cercle directeur différents mais cependant qui ont un même axe 23-652.

En se référant maintenant à la partie inférieure de la tige 1, on y voit un chariot 7, à base triangulaire équilatérale. Chaque sommet de la base du chariot 7 comporte une roue pivotante à bandage caoutchouté 70 ainsi qu'un boulon vertical 71 permettant la stabilisation du chariot sur le sol de la salle réverbérante. Le centre de l'ossature du chariot 7 comporte un socle circulaire 72 sur lequel est montée à rotation verticale, par l'intermédiaire d'une crapaudine convenable 73, l'extrémité inférieure de la tige 1. Le socle 72 supporte un second moteur 8 qui commande la rotation verticale de la tige 1 autour de son axe et, par suite, de l'ensemble barre 3, bras 60 et manivelle 65, au moyen d'une transmission, par exemple à courroie caoutchoutée dentée 80.

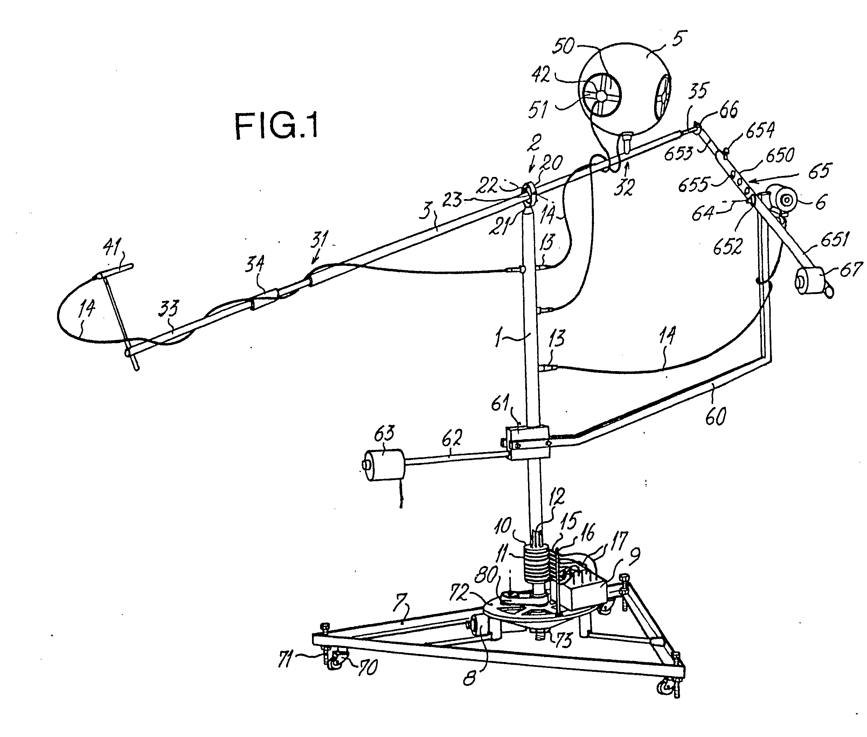

Le socle 72 du chariot supporte également l'alimentation de la source de bruit contenu dans l'enceinte acoustique 5, l'appareil de mesure pour traiter les signaux électriques transmis par les premier et second microphones 41 et 42 et, éventuellement, les diverses alimentations nécessaires au fonctionnement des premier et second moteurs 6 et 8. Ces alimentations et appareil de mesure précités sont représentés dans leur ensemble par le bloc 9. On notera que ledit appareil de mesure est un appareil de mesure de l'isolement et de l'absorption acoustique connu sous le nom de « comparaphone » (marque déposée) du type décrit dans le brevet français FR-B-2 208 535 (et dans les brevets correspondants britannique GB-A-1 423 756 et allemand DE-C-2 358 034) ou du type décrit selon la variante à modulation de phase montrée à la Fig. 2 du brevet français FR-B-2 346 696 ou connu sous le nom d'isolmètre (voir la demande de brevet français n° PV. 78 05 372 déposée le 24 février 1978 et les demandes de brevet correspondantes britannique GB-A-2 016 698 et allemande DE-A-2 906 443). On rappelle que le comparaphone compare les niveaux de pression acoustique captés par les premier et second microphones 41 et 42, en évaluant les différences de ces niveaux respectifs. La différence du niveau de puissance de la source et du niveau de pression dans le champ acoustique réverbéré est alors mesurée directement.

Les différents organes contenus dans le bloc 9 sont reliés électriquement aux éléments correspondants supportés par la tige 1 à travers un connecteur annulaire. Ce connecteur comporte une bague isolante 10, en plexiglas par exemple, qui est fixée coaxialement à l'extrémité inférieure de la tige 1, et qui est entraînée à rotation simultanément avec la tige 1. La bague 10 est pourvue d'anneaux conducteurs 11, superposés verticalement, qui sont reliés respectivement à des fils conducteurs, tels que 12, descendant à l'intérieur de la tige 1. Les autres extrémités de ces fils 12 sont reliées, à travers des fiches de connexion, telles que 13, fixées à la partie supérieure de la tige 1 et à travers des fils de connexion, tels que 14, respectivement aux microphones 41 et 42, à la source de bruit contenue dans l'enceinte acoustique 5 et au premier moteur 6. Comme on le voit sur la figure, les fils 14 sont enroulés autour de la barre 3 ou du bras 60. Chaque anneau conducteur 11 de la bague 10 est en contact électrique avec des balais conducteurs, tels que des lames conductrices flexibles 15, fixés par l'intermédiaire d'un support 16 sur le socle 72 du chariot 7. Ces balais conducteurs sont reliés convenablement par des fils conducteurs 17 aux bornes des organes contenus dans le bloc 9. Ainsi, à travers le jeu des fils 14, de fiches 13, de fils 12 dans la tige 1, d'anneaux conducteurs 11, de balais 15 et de fils 17, les microphones 41 et 42 sont reliés respectivement aux chaînes d'amplification de l'appareil de mesure, la source de bruit contenue dans l'enceinte 5 à sa source d'alimentation et le moteur 6 à une source d'alimentation ou directement au secteur de la salle réverbérante.

Les procédures de mesure au moyen de l'appareillage conforme à la présente invention sont analogues à celles décrites dans le brevet français FR-B-2 346 696 à l'exception que, pour une pluralité de mesures relatives à des sources de bruit et à des matériaux dans une salle réverbérante donnée, la phase mettant en œuvre la source de bruit étalon contenue dans l'enceinte acoustique 5 peut être commune à toutes les mesures. Au cours de cette phase, on mesure l'intensité directe émise par la source de bruit étalon pour une variation continue du niveau de puissance dans une plage prédéterminée, et pour différentes positions microphoniques. Les positions microphoniques correspondant à différentes trajectoires de la barre 3, relativement complexes, qui sont choisies par réglage de la position du coulisseau 61 le long de la tige 1 et de la longueur effective du bras 650 de la manivelle 65, c'est-à-dire de la distance entre l'extrémité à rotule de la petite barre 35 et du point de fixation 652 de la manivelle sur l'axe 64 du moteur 6. Ces différents réglages sont repérés par rapport à des graduations incrustées le long de la tige 1 et du bras 650 de la manivelle 65. Les positions microphoniques peuvent dépendre également des vitesses relatives choisies des premier et second moteurs 6 et 8 qui comportent chacun un réducteur de vitesse ajustable. De préférence, la tige 1 sur le chariot 7 est placée suivant l'axe vertical central de la salle réverbérante. Puis, au cours de chaque phase de mesure proprement dite relative à une source de bruit à tester ou à un matériau à tester, on règle à nouveau les positions du coulisseau 61, la longueur du bras 650 de la manivelle 65 et les vitesses de rotation des moteurs 6 et 8 afin d'obtenir successivement les différentes trajectoires définies au cours de la phase d'étalonnage commune précédente.

**Revendications**

1. Appareillage de mesures acoustiques pour évaluer dans une salle réverbérante la puissance acoustique d'une source de bruit à tester ou le facteur d'absorption d'un matériau à tester, ledit appareillage comprenant une enceinte acoustique (5) renfermant une source de bruit de puissance prédéterminée et ayant une pluralité de haut-parleurs (50), un premier microphone (41) positionné dans le champ réverbéré de ladite source de bruit de puissance prédéterminée pour détecter le niveau de pression acoustique dans le champ réverbéré, un second microphone (42) fixé à l'un (50) des haut-parleurs de l'enceinte acoustique (5) pour détecter le niveau de pression acoustique du son direct émis par ladite source de bruit de puissance prédéterminée, des moyens (9) pour traiter les signaux électriques transmis par les premier et second microphones pour évaluer la puissance acoustique de la source de bruit à tester ou le facteur d'absorption du matériau à tester, une articulation à cardan (2), une tige (1) supportant l'articulation à cardan, une barre (3) qui est fixée au point de pivotement (23) de l'articulation à cardan (2), lequel partage ladite barre (3) en un premier tronçon (31) auquel est fixé le premier microphone (41) et en un second tronçon (32) auquel est fixée l'enceinte acoustique (5), et un premier moteur (6) relié mécaniquement au second tronçon (32) de la barre pour entraîner à rotation la barre (3) autour d'un axe passant par ledit point de pivotement (23), la distance entre l'enceinte acoustique (5) et le premier microphone (41) restant constante pendant ladite rotation, caractérisé en ce qu'il comprend un bras (60) fixé par l'une (61) de ses extrémités à ladite tige (1) et supportant par son autre extrémité le premier moteur (6), et un second moteur (8) pour entraîner à rotation ladite tige (1) autour de son axe.

2. Appareillage conforme à la revendication 1, caractérisé en ce que le second tronçon (32) de ladite barre (3) est pourvu d'une tige télescopique (35) dont une extrémité est reliée par une articulation à rotule (66) à une manivelle (65) solidaire de l'axe de rotation (64) du premier moteur (6) et en ce que le bras (60) supportant le premier moteur (6) est coulissable et réglable en position le long de ladite tige (1) afin que la barre (3) ait un mouvement enveloppant deux cônes obliques opposés par leurs sommets confondus avec le point de pivotement fixe (23) de l'articulation à cadran (2), lorsque le second moteur (8) est arrêté.

3. Appareillage conforme à la revendication 2, caractérisé en ce que ladite manivelle (65) a sa longueur ajustable afin d'ajuster l'angle au sommet desdits cônes.

4. Appareillage conforme à la revendication 3, caractérisé en ce que ladite manivelle (65) comporte à son extrémité reliée à l'articulation à rotule (66) une tige télescopique de longueur ajustable (653).

5. Appareillage conforme à la revendication 3 ou 4, caractérisé en ce que ladite manivelle (65) comporte des cavités (655) qui sont adaptées à la rotule d'extrémité (66) de la tige télescopique (35) du second tronçon (32) de ladite barre (3) et qui sont réparties le long de ladite manivelle (65).

6. Appareillage conforme à l'une des revendications 1 à 5, caractérisé en ce que ladite tige (1) comporte une bague (10) à anneaux conducteurs (11) qui sont interconnectés aux extrémités de fils conducteurs (12) solidaires de la tige (1) et reliés au moins à l'un des éléments tels que premier microphone (41), second microphone (42), source de bruit de puissance prédéterminée (5) et premier moteur (6), et à des balais conducteurs fixes (15) reliés respectivement aux bornes (17) desdits moyens (9) de traitement des signaux électriques, et aux bornes (17) des alimentations (9) de la source de bruit de puissance prédéterminée et du premier moteur.

7. Appareillage conforme à l'une des revendications 1 à 6, caractérisé en ce qu'il comprend un chariot (7) formant le piédestal mobile de l'appareillage et supportant au moins la base de ladite tige (1) et ledit second moteur (8).

8. Appareillage conforme à l'une des revendications 1 à 7, caractérisé en ce qu'au moins l'un des premier et second moteurs (6, 8) a une vitesse de rotation ajustable.

**Claims**

1. Acoustic measuring apparatus for use in a reverberation chamber to evaluate the acoustic power of a noise source or the acoustic absorption factor of a material under test, said apparatus comprising an acoustic chamber (5) enclosing a noise source of predetermined power and having a plurality of loudspeakers (50), a first microphone (41) positioned in the reverberation field of said predetermined power noise source to detect the acoustic pressure level in the reverberation field, a second microphone (42) secured to one (50) of the loudspeakers of the acoustic chamber (5) to detect the acoustic pressure level of direct sound emitted by said predetermined power noise source, means (9) for processing the electrical signals delivered from the first and second microphones to evaluate the acoustic power of the noise source under test or the acoustic absorption factor of material under test, an universal joint (2), a rod (1) bearing the universal joint, a bar (3) which is secured to the pivot point (23) of the universal joint (2), said universal joint dividing said bar (3) into a first portion (31) to which is secured the first microphone (41), and a second portion (32) to which is secured the acoustic chamber (5), and a first motor (6) mechanical connected to the second portion (32) of the bar (3) for driving the bar (3) in rotation around an axis passing through said pivot point (23), the distance between the acoustic chamber (5) and the first microphone (41) and the orientation of the acoustic chamber (5) with respect to the first microphone (41) remaining constant during said rotation, characterized in that it comprises an arm (60) secured to said rod (1) at one (61) of its ends and bearing the first motor (6) at its other end, and a second motor (8) for driving said rod (1) in rotation around its axis.

2. Apparatus according to claim 1, characterized in that said second portion (32) of said bar (3) is provided with a telescopic rod (35), an end of which is connected by means of a knee joint (66) to a crank (65) secured to the rotating shaft (64) of the first motor (6) and in that the arm (60) bearing the first motor (6) is slidable and adjustable in position along said rod (1) so that the motion of the bar (3) describes two opposite oblique cones having their apices mingled with the pivot point (23) of the universal joint (2) when stopping the second motor (8).

3. Apparatus according to claim 2, characterized in that said crank (65) has its adjustable length to adjust the apex angle of said cones.

4. Apparatus according to claim 3, characterized in that said crank (65) comprises a telescopic rod (653) having an adjustable length at its end connected to the knee joint (66).

5. Apparatus according to claim 3 or 4, characterized in that said crank (65) comprises recesses (655) which are fitted to the end knee of the telescopic rod (35) of the second portion (32) of said bar (3) and which are distributed along said crank (65).

6. Apparatus according to any one of claims 1 to 5, characterized in that said rod (1) comprises a sleeve (10) having conductive rings (11) which are interconnected between the ends of conductive wires (12) solid with the rod (1) and connected to at least one of elements such as first microphone (41), second microphone (42), predetermined power noise source (5) and first motor (6), and stationary conductive brushes (15) respectively connected to the terminals (17) of said electrical signal processing means (9) ant to the terminals (17) of the power supplies (9) of the predetermined power noise source and the first motor.

7. Apparatus according to any one of claims 1 to 6, characterized in that it comprises a carriage (7) forming the moving pedestal of the apparatus and bearing at least the base of the rod (1) and said second motor (8).

8. Apparatus according to any one of claims 1 to 7, characterized in that at least one of the first and second motors (6, 8) has an adjustable rotation velocity.

**Ansprüche**

1. Einrichtung zum Messen der Schallstärke einer Schallquelle in einem Nachhallraum oder zum Messen des Schallabsorptionskoeffizienten eines Materials, mit einem Schallkörper (5), der eine Schallquelle vorgegebener Schallstärke umfaßt und mehrere Lautsprecher (50) besitzt, mit einem im Nachhallfeld der Schallquelle vorgegebener Schallstärke angeordneten ersten Mikrofon (41) zur Feststellung des Schalldruckpegels im Nachhallfeld, mit einem an einem (50) der Lautsprecher des Schallkörpers (5) befestigten zweiten Mikrofon (42) zur Feststellung des Schalldruckpegels des von der Schallquelle mit vorgegebener Schallstärke direkt ausgesandten Schalls, mit einer Einrichtung (9) zur Verwertung der vom ersten und vom zweiten Mikrofon gelieferten elektrischen Signale zwecks Bestimmung der Schallstärke der zu prüfenden Schallquelle oder des Schallabsorptionskoeffizientens des zu prüfenden Materials, mit einem Kardangelenk (2), einer Tragstange (1) für das Kardangelenk, einem im Schwenkpunkt (23) des Kardangelenks (2) befestigten Stab (3), der durch den Schwenkpunkt (23) des Kardangelenkes (2) in einen ersten Abschnitt (31), an welchem das erste Mikrofon (41) befestigt ist, und in einen zweiten Abschnitt (32), an welchem der Schallkörper (5) befestigt ist, unterteilt ist, und mit einem mit dem zweiten Abschnitt (32) des Stabes (3) mechanisch verbundenen ersten Motor (6) zum Drehen des Stabes (3) um eine durch den Schwenkpunkt (23) verlaufende Achse, wobei der Abstand zwischen dem Schallkörper (5) und dem ersten Mikrofon (41) und die Ausrichtung des Schallkörpers (5) zum ersten Mikrofon (41) während der Drehbewegung konstant bleiben, dadurch gekennzeichnet, daß sie einen Arm (60) aufweist, der mit seinem einen Ende (61) an der Tragstange (1) befestigt ist und an seinem anderen Ende den ersten Motor (6) trägt, und gekennzeichnet durch einen zweiten Motor (8) zum Drehen der Tragstange (1) um ihre Achse.

2. Einrichtung nach Anspruch 1, dadurch gekennzeichnet, daß der zweite Abschnitt (32) des Stabes (3) mit einem Teleskopstab (35) versehen ist, dessen eines Ende über ein Kugelgelenk (66) mit einem Kurbelarm (65) verbunden ist, der mit der Welle (64) des ersten Motors (6) fest verbunden ist, und daß der den ersten Motor (6) tragende Arm (60) auf der Tragstange (1) verschiebbar gelagert wird, so daß der Stab (3) eine Bewegung erfährt, in welcher er bei abgeschaltetem zweiten Motor (8) die Mantelflächen von zwei einander entgegengerichteten und sich mit ihren Spitzen im Schwenkpunkt (23) des Kardangelenkes (2) treffenden Kegeln beschreibt.

3. Einrichtung nach Anspruch 2, dadurch gekennzeichnet, daß zur Veränderung des Spitzenwinkels der beschriebenen Kegel der Kurbelarm (65) in seiner Länge verstellbar ist.

4. Einrichtung nach Anspruch 3, dadurch gekennzeichnet, daß der Kurbelarm (65) an seinem mit dem Kugelgelenk (66) verbundenen Ende einen Teleskopstab (653) einstellbarer Länge aufweist.

5. Einrichtung nach Anspruch 3 oder 4, dadurch gekennzeichnet, daß der Kurbelarm (65) Öffnungen (655) aufweist, die an das Kugelgelenk (66) der Teleskopstange (35) des zweiten Abschnitts (32) des Stabes (3) angepaßt sind und entlang des Kurbelarmes (65) verteilt sind.

6. Einrichtung nach einem der Ansprüche 1 bis 5, dadurch gekennzeichnet, daß die Tragstange (1) eine Scheibe (10) mit Kontaktringen (11) aufweist, die mit den Enden von an der Tragstange (1) befestigten elektrischen Leitern (12) verbunden sind, die zu mindestens einem der Elemente, beispielsweise dem ersten Mikrofon (41), dem zweiten Mikrofon (42), der Schallquelle (5) vorgegebener Schallstärke und dem ersten Motor (6) führen, und mit feststehenden Kontaktbürsten (15), die mit Anschlüssen (17) der Einrichtung (9) zur Behandlung der elektrischen Signale und mit Anschlüssen (17) des Versorgungsteils (9) für die Schallquelle vorgegebener Schallstärke und für den ersten Motor (6) verbunden sind.

7. Einrichtung nach einem der Ansprüche 1 bis 6, dadurch gekennzeichnet, daß sie einen den beweglichen Fußteil der ganzen Anordnung bildenden Wagen (7) aufweist, der mindestens das untere Ende der Tragstange (1) und den zweiten Motor (8) trägt.

8. Einrichtung nach einem der Ansprüche 1 bis 7, dadurch gekennzeichnet, daß die Drehzahl mindestens eines der beiden Motoren (6, 8) einstellbar ist.

# FIG.1